# EUROPÄISCHE PATENTSCHRIFT

(11) **EP 3 097 019 B1**
(45) Veröffentlichungstag und Bekanntmachung des Hinweises auf die Patenterteilung: **14.03.2018**
(21) Anmeldenummer: 15700062.1
(22) Anmeldetag: 08.01.2015
(51) Int. Cl.: B65B 55/02, B65B 57/00, B65B 59/00, B65B 1/06, B65B 1/40, G05B 19/418, G06Q 50/04

(54) **VERFAHREN ZUR STEUERUNG EINER VERPACKUNGSMASCHINE SOWIE EINE VERPACKUNGSMASCHINE**
METHOD OF AUTOMATING A PACKAGING MACHINE AND A PACKAGING MACHINE
PROCÉDÉ D'AUTOMATISATION D'UNE MACHINE D'EMBALLAGE ET UNE MACHINE D'EMBALLAGE

(30) Priorität: 23.01.2014 DE 102014000701
(43) Veröffentlichungstag der Anmeldung: 30.11.2016
(73) Patentinhaber: SIG Technology AG, 8212 Neuhausen (CH)
(72) Erfinder: KONZE, Sabine, 52441 Linnich (DE); THEISSEN, Peter, 52525 Waldfeucht (DE); MERTEN, Lukas, 41352 Korschenbroich (DE)
(74) Vertreter: Cohausz & Florack
(86) Internationale Anmeldenummer: PCT/EP2015/050194
(87) Internationale Veröffentlichungsnummer: WO 2015/110288

(56) Entgegenhaltungen:
- EP-A1- 2 578 499
- EP-A2- 2 103 522
- EP-A2- 2 209 055
- WO-A1-2004/069662

## Beschreibung

Der Gegenstand betrifft ein Verfahren zur Steuerung einer Verpackungsmaschine sowie eine Verpackungsmaschine. Bei dem gegenständlichen Verfahren und der gegenständlichen Verpackungsmaschine werden zunächst zwei Betriebszustände definiert. Jedem dieser Betriebszustände werden Prozessabläufe zugeordnet, so dass abhängig vom Betriebszustand bestimmte Prozesse durchlaufen werden können. In jedem dieser Prozessabläufe ist zumindest ein Aktor aktiv angesprochen, der zur Durchführung zumindest einer Aktion der Verpackungsmaschine eingerichtet ist. Das heißt, dass in einem Prozessablauf ein Aktor derart angesteuert wird, dass er bestimmte Aktionen an der Verpackungsmaschine durchführen kann.

Verpackungsmaschinen, sowie im Dokument EP 2 578 499 offenbart, und insbesondere Füllmaschinen sind in einer Vielzahl von weitgehend eigenständigen Unterarten hinlänglich bekannt. Spricht man allgemein von Füllmaschinen, wenn ein Gut in fließ- und/oder schüttfähigem Zustand in ein Behältnis gefüllt wird, unterscheidet der Fachmann im Einzelnen doch stark nach den vorliegenden Aggregatzuständen des Füllgutes und ob beispielsweise in Kunststoff- oder Glasflaschen oder etwa in Kartons aus Verbundmaterialien verfüllt wird.
Bei dem Füllen in Kartons aus Verbundmaterialien haben sich zwei grundsätzliche Verfahren etabliert: Bei dem ersten Verfahren wird das Füllgut in einen, um einen Fülldorn geformten Schlauch, gefüllt, aus dem dann zunächst einzelne beutelartige Behältnisse abgekniffen werden, die erst anschließend zu stabilen Kartons umgeformt werden. Bei dem zweiten Verfahren wird das Füllgut in zuvor bereits geformte und nur noch zu einer Seite offenen Kartons gefüllt und der Karton anschließend verschlossen.

Problematisch bei der Steuerung von Verpackungsmaschinen ist jedoch, dass verschiedenste Prozessabläufe bzw. die damit verbundenen Steuerroutinen den Zustand der Betriebsmittel verändern können. So kann ein Prozessablauf für eine Sterilisation beispielsweise eine Heizung ansteuern und aktivieren. Wenn daneben beispielsweise ein weiterer Prozessablauf aktiv ist, der ggf. ebenfalls versucht, die Heizung anzusteuern, z.B. diese auszuschalten, ist der Zustand der Heizung unbekannt und kann nicht ohne weiteres nachvollzogen werden.

Für einen Servicetechniker oder Ingenieur, der mit der Betreuung oder Wartung einer Füllmaschine beauftragt ist, im weitesten Sinne also für den Betreiber der Verpackungsmaschine ist daher anhand der Prozessbeschreibung und des Programmablaufs nicht sichtbar, welchen Zustand ein Betriebsmittel (Aktor oder Sensor) zu einem bestimmten Zeitpunkt hat. Insbesondere wenn verschiedene Prozessabläufe gleichzeitig oder wahlfrei auf ein und dasselbe Betriebsmittel zugreifen können, ist es anhand einer Beschreibung eines Prozessablaufs nicht möglich zu erkennen, welchen Zustand ein Betriebsmittel zu einer bestimmten Zeit hat. Dies ist insbesondere problematisch vor dem Hintergrund des Eingriffs in den Produktionsprozess und der Änderungen an Prozessabläufen, da Änderungen an Prozessabläufen gegebenenfalls zu unerwünschten Ergebnissen führen können.

Dem Gegenstand lag somit die Aufgabe zu Grunde, ein Verfahren zur Steuerung einer Verpackungsmaschine sowie eine Verpackungsmaschine zur Verfügung zu stellen, bei der Zustände von Betriebsmittels zu jedem Zeitpunkt des Betriebs anhand einer Prozessbeschreibung bestimmbar sind.

Diese Aufgabe wird gegenständlich dadurch gelöst, dass abhängig vom Betriebszustand eine Zugriffsberechtigung auf ein Betriebsmittel exklusiv genau einem Prozessablauf zugeordnet wird. Somit ist es möglich, anhand einer Kenntnis über den Betriebszustand der Maschine eine Aussage darüber zu treffen, welcher Prozessablauf einen jeweiligen Ablauf steuert und im Anschluss daran ist es möglich, ohne das jeweilige Betriebsmittel begutachten zu müssen, dessen Zustand anhand der Beschreibung des Prozessablaufs und des aktuellen Prozessablaufschritts zu bestimmen.

Ein die Maschine betreuender Servicetechniker oder Ingenieur kann somit zu jedem Zeitpunkt eine Aussage über den (Soll-)Zustand eines jeden Betriebsmittels treffen. Bei Abweichungen des Ist- zum Sollzustand ist dann auf Grund der eindeutigen und unmittelbar ersichtlichen Sachlage des Sollzustands eine Fehleranalyse innerhalb kürzester Zeit durchführbar.

Im Sinne dieser Schrift werden nicht nur aktive Elemente (Aktoren) wie z.B. Ventile sondern auch Sensoren, beispielsweise zur Ermittlung von Temperaturen, Durchflüssen oder Drücken, als Betriebsmittel bezeichnet. Damit unterliegt auch das Aktiv-Schalten oder Aktivieren eines Sensors der gleichen Systematik wie das Schalten von Aktoren. Ein dadurch in einem Prozessablauf temporär freigeschalteter Sensor kann dann seine Meldungen - beispielsweise eine Fehlermeldung bei einer von ihm ermittelten Grenzwertüberschreitung - aktiv in den gültigen Prozessablauf einbringen. Der Prozessablauf kann aber vorsehen, den Sensor in einem späteren Schritt wieder abzuschalten. Auch können logische Verknüpfungen im Sinne der vorliegenden Schrift als Betriebsmittel bezeichnet werden. So kann beispielsweise ein Signal-Austausch (Im- und Exportsignale) oder eine Funktion zur Verknüpfung von bestimmten Ereignissen frei geschaltet werden oder wieder abgeschaltet werden. Wenn nachfolgend auch teilweise nur von einem Aktor, einem Sensor oder einer Verknüpfung die Rede ist, kann ggf. die beschriebene Funktion auch einem anderen Betriebsmittel zugeordnet werden.

Durch das gegenständliche Verfahren ist es nicht mehr notwendig, zu überprüfen, welche Prozessabläufe gegebenenfalls Zugriff auf ein Betriebsmittel haben könnten. Selbst wenn diese Überprüfung möglich wäre, könnte bei einem Zugriff von mehreren Prozessabläufen auf ein Betriebsmittel immer noch nicht eindeutig dessen Zustand bestimmt werden, da dann noch nicht bekannt ist, welchen Prozessschritt ein jeweiliger Prozessablauf in einem bestimmten Zeitpunkt durchlaufen hat und welchen Zustand ein Prozessablauf hat sowie welcher Prozessablauf letztmalig auf das Betriebsmittel zugegriffen hat.

Eine Verpackungsmaschine hat beispielsweise die Zustände "Hochlaufen", "Produktion" und "Herunterfahren". Neben diesen drei Betriebszuständen können je nach Anwendung weitere Betriebszustände der Maschine definiert sein. Bei einer Füllmaschine für Nahrungsmittel können dies beispielsweise "Sterilisation H₂O₂" und/oder auch "Reinigung CIP" sein. Bei anderen Maschinen kann beispielsweise der Zustand "Sterilisation" entfallen. Auch ist es beispielsweise möglich, dass in einem "Umrüsten" Zustand ein Umrüsten der Maschine erfolgt und hierfür bestimmte Aktoren zunächst in für das Umrüsten geeignete Stellungen gebracht werden müssen.

Während jedes Betriebszustands kann die Maschine auch Zwischenzustände einnehmen. Um eine höhere Granularität hinsichtlich der Zuweisung von Betriebsmittels zu Prozessabläufen zu ermöglichen, wird vorgeschlagen, dass zumindest einer der Betriebszustände zumindest zwei Zwischenzustände aufweist und der exklusive Zugriff eines Prozessablaufs auf ein Betriebsmittel abhängig von dem Zwischenzustand ist.

Da gegenständlich in Abhängigkeit vom Betriebszustand eine Zugriffsberechtigung auf ein Betriebsmittel exklusiv genau einem Prozessablauf zugeordnet ist, wobei die Umstände, die einen bestimmten Betriebszustand bestimmen vorher definierbar sein können, soll im Sinne der vorliegenden Schrift auch bei solchen möglichen Zwischenzuständen von einem Betriebszustand gesprochen werden.

Die Betriebszustände, vorzugsweise alle Betriebszustände, verlangen von den Betriebsmitteln, vorzugsweise von allen Betriebsmitteln bestimmte Aktionen, die in den jeweiligen Prozessabläufen definiert sind. Jeder dieser Betriebszustände hat zumindest einen zugewiesenen Prozessablauf welcher den exklusiven Zugriff auf zumindest ein jeweiliges Betriebsmittel hat. Für verschiedene Betriebsmittel bzw. verschiedene Gruppen können in einem Betriebszustand auch jeweils andere Prozessabläufe zuständig sein. Das bedeutet, dass jedem Betriebsmittel vorzugsweise zu jedem Zeitpunkt eine Aktion zugewiesen ist, selbst wenn es sich lediglich um eine "Ruhe-Aktion" handelt. Die Verantwortlichkeit, welcher Prozessablauf dem jeweiligen Betriebsmittel seine aktuelle Aktion exklusiv zuzuweisen hat, kann jedoch nach den in der Steuerung der Maschine hinterlegten Abhängigkeiten wechseln, wenn dies durch den Prozessablauf erlaubt ist.

Gemäß einem Ausführungsbeispiel wird vorgeschlagen, dass zumindest zwei Betriebsmittel abhängig von ihren jeweiligen Funktionen innerhalb der Verpackungsmaschine zu einer Gruppe zugeordnet werden können und dass die exklusive Zugriffsberechtigung zu Betriebsmitteln einer Gruppe einem Prozessablauf zugeordnet sein können. Es hat sich gezeigt, dass die Komplexität der Zuordnung von exklusiven Zugriffsberechtigungen erheblich reduziert werden kann, wenn Betriebsmittel-Gruppen definiert werden. Ein Betriebsmittel kann jeweils nur genau einer Gruppe zugeordnet sein. Eine Gruppe kann eine funktionale Einheit betreffen. So kann beispielsweise eine Entlüftungseinheit aus einem Ventilator und einem Stellventil gebildet sein. Zum Entlüften muss das Stellventil geöffnet und der Ventilator eingeschaltet sein. Somit müssen zwei Betriebsmittel aktiviert werden, um die Funktionalität einer solchen Einheit zur Verfügung zu stellen. Der Ventilator und das Stellventil könnten somit zu einer Gruppe "Entlüftungseinheit" zusammengefasst werden.

Eine Begasungseinheit kann beispielsweise aus Dosier- und Regelventil, sowie temperaturüberwachten Filtern und Ventilen bestehen. Alle für die Funktionalität dieser Einrichtung notwendigen Betriebsmittel können dann in einer jeweiligen Gruppe zusammengefasst sein. Während des Betriebs der Maschine können zu jedem Betriebszustand ein oder mehrere Prozessabläufe definiert sein, die eine exklusive Zugriffsberechtigung auf jeweils ein Betriebsmittel und/oder eine der Gruppen und somit alle der Gruppe angehörigen Betriebsmittel aufweisen. Kein anderer Prozessablauf darf zu diesem Betriebszustand auf die Betriebsmittel der jeweiligen Gruppe zugreifen. Für jede Gruppe kann jeweils ein eigener Prozessablauf zuständig sein, so dass in einem Betriebszustand unterschiedlichen Betriebsmitteln und/oder Gruppen auch verschiedene Prozessabläufe zugeordnet sein können.

Während eines Prozessablaufes ist es notwendig, zu definieren, welche Schritte eine Maschine durchführen soll. Dazu gehört z.B. das Verstellen und Einstellen von Aktoren, beispielsweise das Auf- und Zustellen eines Ventils oder das Erhitzen einer Heizung auf eine bestimmte Temperatur. Das Aktivieren eines Ventilators oder einer Pumpe kann ebenfalls als Stellen eines Aktors gewertet werden. Es wird vorgeschlagen, dass nur der exklusiv zugriffsberechtigte Prozessablauf einen Zustand eines Betriebsmittels ändern, insbesondere steuern oder regeln kann. Das heißt, dass der Zustand des Betriebsmittels nur durch den Prozessablauf geändert, insbesondere gesteuert oder geregeltwerden kann, der die exklusive Zugriffsberechtigung hat. Somit ist der Zustand eines Betriebsmittels durch Überprüfen des jeweils exklusiv zugriffsberechtigten Prozessablaufs und ggf. des aktuellen Prozessablaufschritts möglich. Abhängig von diesem Prozessablauf lässt sich der Zustand eines Betriebsmittels bestimmen, da kein anderer Prozessablauf während des definierten Betriebszustands in den Zustand des Betriebsmittels gegenständlich eingreifen darf.

Die Maschine kann während des Betriebs zwischen Betriebszuständen wechseln. Die Zugriffsberechtigung ist gegenständlich abhängig von dem Betriebszustand. Somit ist es notwendig, dass bei jedem Wechsel zwischen Betriebszuständen die aktuelle Zugriffsberechtigung für ein Betriebsmittel oder eine Gruppe überprüft wird. Bei einem Wechsel zwischen Betriebszuständen kann die exklusive Zugriffsberechtigung bei dem bisher zugriffsberechtigten Prozessablauf verbleiben oder ein Wechsel notwendig sein. Ist ein Wechsel der Zugriffsberechtigung notwendig, kann diese für jeweils ein Betriebsmittel oder eine Gruppe einem anderen Prozessablauf zugewiesen werden. Somit wird sichergestellt, dass nach einem Wechsel zwischen Betriebszuständen der jeweils verantwortliche Prozessablauf den exklusiven Zugriff auf das Betriebsmittel bzw. die Gruppe hat.

Die gegenständliche Verpackungsmaschine weist zu jedem Zeitpunkt nur genau einen Betriebszustand auf. Es ist vorgeschlagen, dass eine gegenständliche Verpackungsmaschine zu einem Zeitpunkt keine zwei verschiedenen Betriebszustände haben kann.

Ein Prozessablauf kann beispielsweise auch verschiedenen Betriebszuständen zugeordnet sein. So ist beispielsweise ein Dampfsperrenprozess sowohl im Betriebszustand "Produktion" als auch im Betriebszustand "Reinigung CIP" notwendig. Der Prozessablauf "Dampfsperre" kann daher auch in beiden Betriebszuständen durchgeführt werden. Abhängig davon, in welchem Betriebszustand der Prozessablauf z.B. des Dampfsperrenprozesses aufgerufen wird, kann sich seine Zuordnung zu Betriebsmitteln ändern. Somit ist die exklusive Zugriffsberechtigung eines Prozessablaufs auf ein Betriebsmittel bzw. eine Gruppe abhängig davon, in welchem Betriebszustand der Prozessablauf durchgeführt wird. Je nach Betriebszustand kann ein und der selbe Prozessablauf eine andere Zuordnung zu Betriebsmitteln aufweisen und somit eine andere Zugriffsberechtigung.

Gegenständlich können in jedem Prozessablauf zumindest zwei Unterprozesse definiert sein. Jeder Unterprozess kann in einzelne Prozessschritte unterteilt sein. Hierbei ist es möglich, jedem Prozessschritt eine Zeit zuzuordnen, welche für den Prozessschritt notwendig ist. Innerhalb dieser Zeit werden die diesem Prozessschritt zugeordneten Aktionen an den jeweiligen Betriebsmitteln durchgeführt.

Eine Gruppe von Betriebsmitteln kann in einer Gruppe zusammengefasst sein. Innerhalb dieser Gruppe ist es möglich, die einzelnen Betriebsmittel aufeinander abgestimmt einzustellen. Es ist denkbar, dass Zustände einzelner Betriebsmittel nur dann möglich sind, wenn andere Betriebsmittel definierte Zustände ebenfalls erreicht haben. Insofern ist innerhalb einer Gruppe gegebenenfalls eine Koordination der Zustände der Betriebsmittel notwendig. Die Abhängigkeiten können vorzugsweise dann am besten nachvollzogen werden, wenn alle Betriebsmittel einer Gruppe mit ihren Zuständen in einer entsprechenden Tabelle gepflegt sind. Jeder Unterprozess eines Prozessablaufs kann dann auf eine der in der jeweiligen Tabelle definierten Zustandskombinationen für die Gruppe verweisen und so sicherstellen, dass die Abhängigkeiten der Zustände stets eingehalten bleiben.

Für jede Gruppe kann genau eine Zugriffstabelle definiert sein. Auch ist es möglich, dass eine gemeinsame Zugriffstabelle für alle Betriebsmittel definiert ist. Auch können Zugriffstabellen für mehrere Betriebsmittel und daneben Zugriffstabellen für Gruppen definiert sein. Innerhalb der Zugriffstabelle können Zustände definiert sein. Insbesondere können alle möglichen (erlaubten) Permutationen bzw. Zustandskombinationen von Zuständen in den Zugriffstabellen definiert sein. Ein Prozessablauf oder ein Unterprozess hat die Möglichkeit, einen Zugriff auf alle Betriebsmittel einer Gruppe über die Zugriffstabelle zu erhalten. Hierbei kann für jede mögliche Kombination von Zuständen z.B. eine einzelne Zeile definiert sein und ein Prozessablauf oder ein Unterprozess kann eine Referenz auf eine Kombination (z.B. die jeweilige Zeile) einer Zugriffstabelle haben. Hierdurch wird sichergestellt, dass während eines Prozessablaufs nur erlaubte Zustände erreicht werden. Die Verpackungsmaschine gelangt somit nicht in Zustände, die nicht erlaubt sind.

Die Programmsteuerung greift also auf die Zugriffstabelle zu, um mit deren Inhalten die Betriebsmittel zu steuern. Damit kann die Zugriffstabelle letztlich auch als Steuertabelle angesprochen werden.

Für jeden Prozessablauf kann eine eigene Zugriffstabelle definiert sein. Dadurch wird die Übersichtlichkeit erheblich gesteigert. Auch ist es dadurch möglich, spätere Änderungen leichter durchführen und nachvollziehen zu können. Dazu ist es fallweise sogar sinnvoll, dass für wenigstens einen Prozessablauf mehrere eigene Zugriffstabellen definiert sind. Eine besonders praxisgerechte Variante kann vorsehen, eine Zugriffstabelle für die Ventile und eine weitere für die anderen Betriebsmittel vorzusehen.

Das heißt, dass für einen ersten Prozessablauf wenigstens eine erste Zugriffstabelle auf eine erste Gruppe definiert ist und für einen zweiten Prozessablauf wenigstens eine zweite Zugriffstabelle für die erste Gruppe definiert ist. Die Zustände der Betriebsmittel für verschiedene Prozessabläufe als auch verschiedene Betriebszustände können variieren, so dass die Zugriffstabelle abhängig von einem Prozessablauf definiert sein kann.

Die Zustände von zumindest zwei Betriebsmitteln können durch Zugriffsbeschreibungen jeweils in einer Zugriffstabelle beschrieben sein. Somit kann für jeden zulässigen Wert einer Kombination von Zuständen eine Zugriffsbeschreibung definiert sein. Alle Zugriffsbeschreibungen können in einer Zugriffstabelle gespeichert sein. Innerhalb eines Prozessablaufs ist somit eine Referenz auf eine bis N Zugriffstabelle(n) und die jeweilige Zugriffsbeschreibung möglich, um eine erlaubte Kombination von Zuständen zu erhalten. Bevorzugt sind die Zugriffsbeschreibungen jedoch in wenigstens einer Zugriffstabelle je Prozessablauf gespeichert, sodass innerhalb des Prozessablaufs eine Referenz auf wenigstens eine Zugriffstabelle und die jeweilige Zugriffsbeschreibung möglich ist.

Während des Betriebs kann eine Verpackungsmaschine beispielsweise die folgenden Betriebszustände durchlaufen. Zunächst befindet sich die Maschine im Zustand "Hochlaufen". Im Falle einer Verpackungsmaschine für Lebensmittel kann die Verpackungsmaschine anschließend in den Zustand "Bereit zur Sterilisation" wechseln. Hierbei ist die Verpackungsmaschine für die Sterilisation in der aseptischen Einheit vorbereitet. Anschließend kann eine "Sterilisation" insbesondere der aseptischen Einheit erfolgen. Nachdem die "Sterilisation" erfolgt ist, kann die Maschine in den Betriebszustand "Produktion" wechseln. Nach Beendigung der Produktion kann der Betriebszustand "Bereit zur Reinigung" eingenommen werden und anschließend kann der Betriebszustand "Reinigung CIP" eingenommen werden. Nach der "Reinigung CIP" kann die Maschine erneut in den Zustand "Bereit zur Sterilisation" wechseln oder auch beispielsweise heruntergefahren werden. Das "Herunterfahren" kann ein eigener Betriebszustand sein.

Während der oben genannten Betriebszustände sind verschiedene Prozessabläufe möglich, die beispielsweise auch in verschiedenen Betriebszuständen ablaufen können. Abhängig davon, in welchem Betriebszustand der Prozessablauf abläuft, kann die Zuordnung zu unterschiedlichen Gruppen erfolgen.

Die häufigsten Prozessabläufe in einer Verpackungsmaschine für Lebensmittel sind die der "H₂O₂-Sterilisation", "H₂O₂-Sterilisation während der Produktion", "Dampfsterilisation", "Produktion", "Transportketten-Reinigung", "Dampfsperre", "Reinigung CIP". Andere Prozessabläufe sind, wie oben bereits beschrieben, ebenfalls möglich und können notwendig sein. Der Einfachheit halber werden diese hier jedoch nicht aufgezählt.

Innerhalb einer Verpackungsmaschine existiert eine Vielzahl unterschiedlicher Typen von Betriebsmitteln. Eine Auswahl der verschiedenen Typen umfasst unter anderem ein Stellventil, eine Heizung, , einen Stellmotor, eine Pumpe, einen Ventilator, einen Durchflussmengenregler, einen Temperatursensor, einen Pneumatikantrieb. Andere Betriebsmittel sind ebenfalls möglich und können im Bedarfsfall angesteuert werden.

Ein weiterer Aspekt ist eine Verpackungsmaschine nach Anspruch 15. Eine definierte Zustandsbeschreibung einer Verpackungsmaschine zu jeder Zeit ist dann möglich, wenn abhängig von einem Betriebszustand die Steuereinrichtung exklusiv nur einen der Prozessabläufe eine Zugriffsberechtigung auf einen Aktor erteilt.

Nachfolgend wird der Gegenstand anhand einer Ausführungsbeispiele zeigenden Zeichnung näher erläutert. In der Zeichnung zeigen:
- Fig. 1: einen systematischen Aufbau einer Zuordnung zwischen Betriebszuständen und Prozessabläufen sowie den jeweiligen Aktoren;
- Fig. 2: eine Zuordnung von Prozessabläufen zu Betriebszuständen;
- Fig. 3: eine exemplarische Beschreibung eines Prozessablaufs;
- Fig. 4: eine schematische Zugriffstabelle mit Zugriffsbeschreibungen;
- Fig. 5: einen schematischen Aufbau einer Verpackungsmaschine.

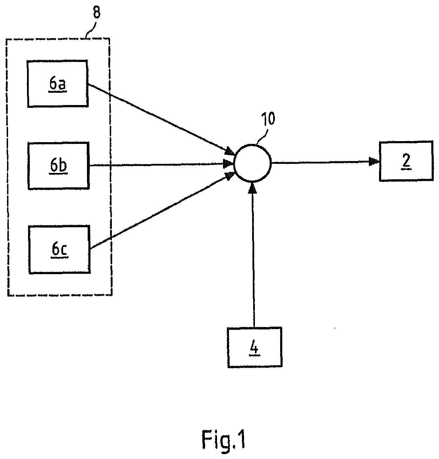

Figur 1 zeigt schematisch einen durch einen Aktor 2 gebildetes Betriebsmittel. Der Aktor 2 kann beispielsweise ein Stellventil sein, welches die Zustände "Auf" und "Zu" einnehmen kann. Es ist jedoch auch möglich, dass der Aktor 2 beispielsweise eine Heizung ist, bei der eine Mediumtemperatur einstellbar ist. Der Aktor 2 kann ein beliebiges Betriebsmittel sein, welches für den Betrieb einer Verpackungsmaschine notwendig ist. Es ist rein beispielhaft nur ein Aktor 2 dargestellt, es versteht sich aber, dass eine Verpackungsmaschine eine Vielzahl Aktoren 2 oder andere Betriebsmittel aufweist, welche vorzugsweise alle wie nachfolgend beschrieben, betrieben werden können. Aktoren 2 können auch zu Gruppen zusammengefasst werden. In diesem Fall gilt die Beschreibung der Figur 1 auch entsprechend für eine Zuordnung eines Prozessablaufs zu einer Gruppe.

Neben dem Aktor 2 kann in einer Verpackungsmaschine eine Mehrzahl von Sensoren (nicht gezeigt) verbaut sein. Die Sensoren können erfassen, ob die Aktoren bestimmte Zustände erreicht haben und diese zurückmelden, um einen Regeleingriff in den Zustand des Aktors 2 zu ermöglichen.

Die Figur 1 zeigt weiter eine Steuereinrichtung 4, welche beispielsweise eine CPU aufweisen kann. Die Steuereinrichtung 4 steuert den Zugriff eines Prozessablaufs 6a-c auf einen der Aktoren 2. Durch die Steuereinrichtung 4 ist es möglich, eine exklusive Zuordnung zwischen einem in einem Programmspeicher 8 hinterlegten Prozessablauf 6a-c und dem Aktor 2 zu steuern. Hierzu wird in der Steuereinrichtung 4 stets der aktuelle Betriebszustand der Verpackungsmaschine erfasst und gespeichert. Je nachdem, in welchem Betriebszustand sich die Verpackungsmaschine befindet, erfolgt durch die Steuereinrichtung 4 eine exklusive Zuordnung eines der Prozessabläufe 6a-c auf den Aktor 2. Diese Zuordnung ist schematisch durch den Schalter 10 dargestellt, welcher andeutet, dass jeweils nur eine eins-zu-eins Beziehung zwischen einem Aktor 2 und einem der Prozessabläufe 6a-c bestehen kann.

Mit Hilfe der Steuereinrichtung 4 ist es somit möglich, stets nur genau einem der Prozessabläufe 6a-c eine Veränderung eines Zustands des Aktors 2 zu ermöglichen. In Kenntnis des Betriebszustands der Verpackungsmaschine kann nun von außerhalb der Verpackungsmaschine stets ermittelt werden, welchen Zustand ein Aktor 2 hat, da stets definiert ist, welcher der Prozessabläufe 6a-c einen exklusiven Zugriff auf den Aktor 2 hat. Wird nun der zugeordnete Prozessablauf analysiert, ergibt sich aus diesem unmittelbar, welchen Zustand der Aktor 2 zu einem beliebigen Zeitpunkt hat.

Innerhalb der Prozessabläufe 6a-c ist es auch möglich, dass sich ein Aktorzustand verändert, beispielsweise nach Zeitablauf oder durch Programmvorgaben. Dies ist jedoch insofern unkritisch, als dass durch Betrachtung des Prozessablaufs und der Prozesszeit ermittelt werden kann, in welchem Prozessschritt sich der Prozessablauf befindet. Der Zustand des Aktors lässt sich anhand des jeweils exklusiven Prozessablaufs bestimmen.

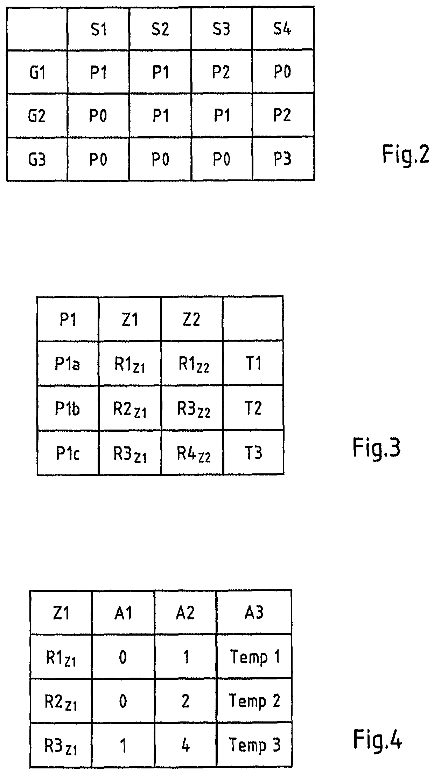

Figur 2 zeigt rein schematisch die Zuordnung von Betriebszuständen S1-S4 und Gruppen G1 - G3 zu Prozessabläufen P0 - P3 innerhalb einer Tabelle. In der Tabelle sind in Zeilen die Gruppen G1 - G3 dargestellt. Jede Zeile ist einer der Gruppen G1 - G3 zugeordnet. Ein Aktor 2 kann nur genau einer Gruppe G1 - G3 zugeordnet sein.

Verschiedene Betriebszustände S1 - S4 sind in den Spalten der Tabelle gemäß Figur 2 aufgetragen. Der Betriebszustand S1 kann beispielsweise ein "Hochlaufen" sein, der Betriebszustand S2 beispielsweise ein "Sterilisieren", der Betriebszustand S3 beispielsweise eine "Produktion" und der Betriebszustand S4 beispielsweise das "Herunterfahren" der Maschine. Jeder der Betriebszustände S1 - S4 kann, wie bereits erläutert, Unterzustände oder Zwischenzustände aufweisen.

Jeder Gruppe G1 - G3 ist zu jedem Zeitpunkt ein Prozessablauf zugeordnet, dabei ist in jedem der Betriebszustände S1 - S4 genau einer der Prozessabläufe P0 - P4 jeweils einer Gruppe G1-G3 zugeordnet. Ein Prozessablauf P0 kann beispielsweise ein Basisbetriebsprozessablauf sein. Dieser Prozessablauf P0 kann beispielsweise die Betriebsmittel jeweils in eine Position und/oder einen Zustand bringen, der für weitere Aktionen am besten geeignet ist. Während des Basisprozessablaufes P0 werden z.B. keine herstellungsspezifischen Prozessschritte durchlaufen.

Neben dem Basisprozessablauf P0 können beispielsweise drei Prozessabläufe P1 - P3 definiert sein, in welchen die Betriebsmittel der Gruppen G1 - G3 jeweils gesteuert werden. Für jeden der Prozessabläufe P0 - P3 können verschiedene Prozessschritte und/oder Unterprozesse definiert werden, wie sie beispielsweise für den Prozessablauf P1 in der Figur 3 dargestellt sind.

In der Figur 2 ist zu erkennen, dass der Prozessablauf P1 für die Gruppe G1 z.B. bei den Betriebszuständen S1 und S2 aktiv ist. Für die Gruppe G1 ist der Prozessablauf P2 für den Betriebszustand S3 und der Prozessablauf P0 für den Betriebszustand S4 aktiv. Auch zu erkennen ist, dass der Prozessablauf P1 z.B. auch im Betriebszustand S2 und S3 für die Gruppe G2 exklusiv zuständig ist. Je nach Betriebszustand kann jedoch eine andere Betriebsweise der Aktoren in den Gruppen G1 und G2 durch den Prozessablauf P1 notwendig sein.

Figur 3 zeigt einen Prozessablauf P1 mit den Prozessschritten P1a - P1c. Jedem Prozessschritt P1a - P1c ist eine Zeit T1 - T3 zugeordnet. Nach dem Durchlaufen eines Prozessschrittes ist eine bestimmte Zeit T1 - T3 beispielsweise ausgedrückt in Millisekunden abgelaufen, bzw. wird diese Zeit T1 - T3 benötigt. Außerdem ist für jeden Prozessschritt eine Referenz R1-R4 auf eine Zustandsbeschreibung innerhalb einer Zustandstabelle Z1 - Z2 vorgesehen. Das heißt in dem gezeigten Beispiel ist der Prozessschritt P1a derart definiert, dass er eine Referenz R1 auf die Zustandstabelle Z1 und eine Referenz R1 auf die Zustandstabelle Z2, wie in Figur 3 dargestellt ist, hat.

Wie in Figur 3 zu erkennen ist, wird die Zustandstabelle Z1 über die Referenzen R1_{Z1} bis R3_{Z1} für die Prozesschritte P1a-P1c referenziert. Die Zustandstabelle Z2 wird über die Referenzen R1_{Z2}, R2_{Z2}, R4_{Z2} referenziert. Die Indizes Z1 und Z2 zeigen an, dass die Referenz R1-R4 auf die jeweiligen Zustandstabellen Z1 oder Z2 verweisen. Es wird deutlich, dass für jeden Prozessschritt P1a - P1c eine andere Referenz auf eine Zustandstabelle Z1, Z2 möglich ist.

Innerhalb der Zustandstabelle Z1 sind dann für jeden Aktor Zustände definiert, wobei jede Referenz R1 - R3 eine andere Zustandsbeschreibung samt Aktorzustände betrifft, wie in Figur 4 beschrieben.

In einer jeweiligen Zustandsbeschreibung, wie in Figur 4 dargestellt, sind die erlaubten/zugewiesenen Permutationen von Aktorzuständen einer Mehrzahl von Betriebsmitteln beschrieben. Dabei ist zu beachten, dass nicht für jeden Prozessablauf P0 - P3 in einer Zustandsbeschreibung der Zustand aller Betriebsmittel definiert sein muss. Auch ist zu beachten, dass durch die Zustandstabelle erlaubte Kombinationen von Zuständen definiert sein können. Ferner kann es notwendig sein, zumindest für den Prozessablauf P0 die Zustände aller Betriebsmittel zu definieren. In den anderen Prozessabläufen P1-P3 kann es möglich sein, nicht alle Betriebsmittel mit ihren Zuständen zu definieren, sondern nur die, die wenigstens temporär im Prozessablauf beteiligt sind - also wenigstens eine Zeit lang "mitspielen" dürfen.

Innerhalb einer Zugriffstabelle Z1 - Z2 können unterschiedliche Kombinationen von Aktorzuständen definiert sein. Dies wird über die Referenzen R1 - R4 auf jeweilige Zugriffsbeschreibungen innerhalb der Zugriffstabellen Z1 referenziert.

Eine Zugriffstabelle Z1 ist in der Figur 4 dargestellt. Hierin sind z.B. Aktoren A1 - A3 definiert. Die erlaubten und im Prozessablauf P1 gewünschten Zustände der Aktoren A1 - A3 sind in den Referenzen R1 - R3 in Zustandsbeschreibungen der Zustandstabelle Z1 beschrieben. Die Referenz R1 definiert beispielsweise den Aktor A1 als geschlossen, den Aktor A2 als geöffnet und den Aktor A3 bei der Temperatur 1. Die Referenz R2 definiert den Aktor A1 als geschlossen, den Aktor A2 in Modus 2, beispielsweise einem getakteten Öffnen-Schließen-Zyklus und den Aktor A3 bei der Temperatur 2. Die Referenz R3 definiert beispielsweise den Aktor A1 als geöffnet, den Aktor A2 in Modus 4 und den Aktor A3 bei der Temperatur 3. Wie zu erkennen ist, können unterschiedliche Kombinationen von Aktorzuständen durch unterschiedliche Referenzen R1-R3 in den Zustandstabellen Z1, Z2 abgebildet werden.

Innerhalb einer Zustandstabelle Z1 sind somit alle erlaubten Kombinationen von Zuständen der Aktoren A1 - A3 definiert. Somit kann zu jedem Zeitpunkt bestimmt werden, in welchem Betriebszustand S1 - S4 sich die Verpackungsmaschine befindet. Abhängig von dem Betriebszustand S1 - S4 ist dann ermittelbar, welcher Prozessablauf P0 - P3 für die jeweilige Aktorengruppe G1 - G3 zuständig ist.

Abhängig von dem zuständigen Prozessablauf P0 - P3 können Zwischenschritte P1a - P1c definiert werden, welche jeweils eine Referenz R1 - R3 auf Zugriffsbeschreibungen für Betriebsmittel aufweisen. Jede Kombination von erlaubten Betriebsmittelzuständen sind in den Zustandsbeschreibungen definiert, so dass durch Überprüfen der jeweils referenzierten Zustandsbeschreibung aus dem Prozessablauf heraus erkennbar ist, in welchem Soll-Zustand sich ein jeweiliger Betriebsmittel befinden soll.

Ein Aktor kann jeweils nur genau einer Gruppe zugeordnet sein. Ferner kann jeweils nur ein Prozessablauf zu einem Betriebszustand einer Gruppe zugeordnet sein, so dass eine eindeutige Beziehung zwischen Betriebszustand, Prozessablauf und Aktor besteht. Ein Aktor kann nur von dem Prozessablauf beeinflusst werden, der die exklusive Zugriffsberechtigung hierauf hat.

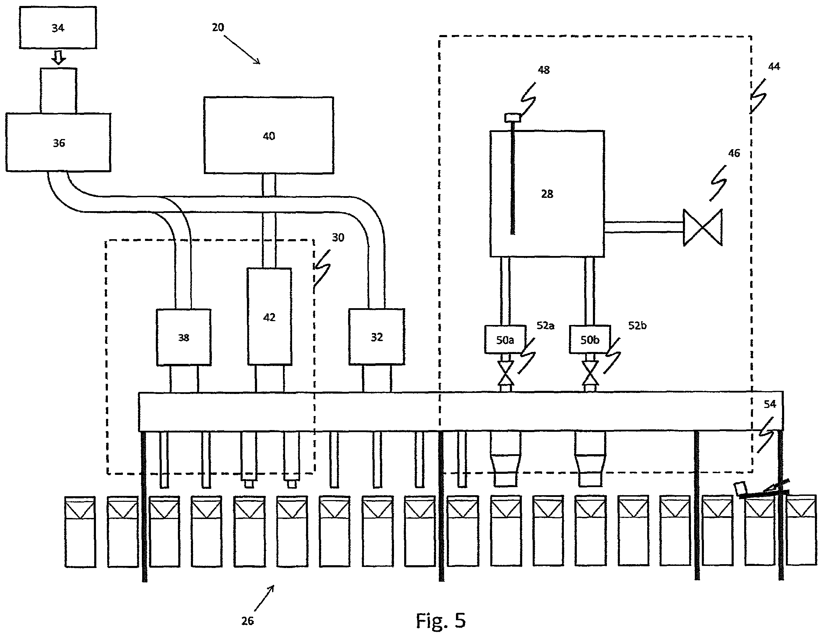

Der Aufbau einer Füllmaschine ist schematisch in Figur 5 erläutert.

Die Füllmaschine 20 weist meist mehrere parallel zueinander angeordnete Fertigungsbahnen auf, an deren jeweiligen Eingang ein Magazin angeordnet ist, das zur Aufnahme der noch als Faltschachtel 24 angelieferten späteren Kartonverpackungen dient. Diese Faltschachteln 24 sind noch zu zwei Seiten hin offen und werden in der Füllmaschine 20 zunächst aufgefaltet und an einer der noch offenen Seiten verschlossen. Anschließend werden die nur noch zu einer Seite hin offenen Kartons 24 einem Transportmechanismus übergeben, der die Packungen in einen reinraumartigen Bereich 26 führt, in dem die Kartonverpackung 24 unter sterilen Bedingungen mit dem Füllgut 28 gefüllt wird. Dazu wird die Packung 24 zunächst in einem Sterilisator 30 sterilisiert, anschließend mit durch ein Gebläse 32 eingebrachter Reinluft ausgespült und erwärmt.

Der Sterilisator kann als Gruppe von Aktoren definiert werden. Darin enthalten sind z.B. ein Ventilator 34, ein Filter 36, eine Heizung 32 und 38, ein H2O2 Dosierer 40 und eine Heizung 42.

Die Fülleinheit 44 kann aus verschiedenen Aktoren zusammengestellt sein. Diese können als Gruppe gebildet sein. So kann z.B. ein Einlassventil 46, ein Füllstandssensor 48, Durchflussmessern 50a, 50b und Auslassventilen 52a, 52b gebildet sein.

Nach dem eigentlichen Füllprozess, der in einem oder mehreren Schritten erfolgen kann, wird die Packung noch im reinraumartigen Bereich 54, der so genannten "Aseptic-Zone" verschlossen. Danach wird auch aus der zuletzt verschlossenen Seite durch Umfalten und Ankleben der beim Schließen entstandenen Kartonlaschen der Packungsgiebel oder der Packungsboden gebildet und die fertige Kartonpackung wird ggf. gekennzeichnet und schließlich nachfolgenden Behandlungsschritten bzw. Behandlungsmaschinen, wie etwa einem Strohhalm- Applikator oder einer Umverpackungsmaschine zugeführt.

Bei dieser Art Füllmaschinen arbeiten in der Regel eine Vielzahl von Betriebsmitteln, insbesondere Aktoren und Sensoren zusammen, um das zu verpackende Gut prozesssicher zu verpacken. Die verschiedenen Betriebsmittel der Maschine müssen so aufeinander abgestimmt sein, dass z.B. in einem getakteten Produktionsprozess jede der innerhalb einer Fertigungsbahn in Reihe hintereinandergeschalteten Produktionseinheit innerhalb des gerade aktuellen Betriebszustandes zu jedem gewünschten Zeitpunkt das gewünschte Ergebnis liefert.

Neben dem Betriebszustand "Produktion", der den eben dargelegten Ablauf ermöglicht, gibt es verschiedene weitere Betriebszustände der Füllmaschine. So sind neben speziellen Zuständen beim Hochlaufen und Herunterfahren, also beim Starten und Abschalten, der Füllmaschine, insbesondere in der lebensmittelverarbeitenden Industrie, beispielsweise auch verschiedene Reinigungsbetriebszustände oder Sterilisationszustände, oder weitere Zustände vorgesehen.

Insbesondere bei Füllmaschinen, die in der lebensmittelverarbeitenden Industrie eingesetzt werden, muss beispielsweise eine Sterilisation der produktführenden Bereiche und der Aseptikzone, erfolgen. Während dieser Sterilisation dürfen natürlich keine neuen Verpackungen der Fülleinheit zugeführt werden. Somit werden hierbei beispielsweise die Zuführeinheit und die darin enthaltenen Aktoren inaktiv und die Sterilisationseinheit und die darin enthaltenen Aktoren aktiv sein. In einer Sterilisationseinheit können unterschiedliche Aktoren, beispielsweise Ventile, Regelventile oder Antriebe enthalten sein, die aufeinander abgestimmt arbeiten müssen.

Während des Reinigungsprozesses ist es beispielsweise nicht notwendig, dass die Sterilisationseinheit bzw. die darin enthaltenen Aktoren aktiv sind. Es kann aber sein, dass ein Aktor sowohl während der Sterilisation als auch während der Reinigung aktiv ist und sein Zustand geändert werden muss.

Rein beispielhaft hat kann der Betriebszustand "Produktion" den Produktionsprozess-Ablauf beinhalten. Dieser Produktionsprozess kann exklusiven Zugriff auf die Aktoren 32-42, 46-52 haben. Die Zustände der Aktoren können dabei wie folgt definiert sein: Aktor 34: EIN, Aktor 38: EIN, Sensoren 50a, 50b: Messung aktiv, Aktor 46: OFFEN, Sensor 48: Messung aktiv, Aktoren 52a, 52b, OFFEN, Aktor 40, aktiv, Aktor 42: EIN.

Für den Betriebszustand "H2O2 Sterilisation" kann die Zugriffsberechtigung auf den Prozessablauf "Sterilisation" übergehen. Dieser Prozessablauf kann dann den exklusiven Zugriff auf die Aktoren 32-42, 46-52 haben. Die erlaubten Zustände der Aktoren können dann wie folgt definiert sein: Aktor 34: AUS, Aktor 38: AUS, Sensoren 50a, 50b: Messung inaktiv, Aktor 46: GESCHLOSSEN, Sensor 48: Messung inaktiv, Aktoren 52a, 52b, GESCHLOSSEN, Aktor 40, aktiv, Aktor 42: EIN.

Zu erkennen ist, dass für jeden Prozessablauf Soll-Zustände der Betriebsmittel definiert sein können. Jeder Prozessablauf hat einen exklusiven Zugriff auf einen oder mehrere Betriebsmittel. Abhängig vom Prozessablauf können verschiedene Permutationen von erlaubten Soll-zuständen in Zustandstabellen hinterlegt sein.

## Patentansprüche

1. Verfahren zur Steuerung einer Verpackungsmaschine, insbesondere einer Füllmaschine, bei dem
- zumindest zwei voneinander unabhängige Betriebszustände der Verpackungsmaschine definiert werden,
- jedem der Betriebszustände zumindest einer aus einer Mehrzahl definierter Prozessabläufe zugeordnet wird, und
- durch einen Prozessablauf zumindest ein Betriebsmittel der Verpackungsmaschine zur Durchführung zumindest einer Aktion angesteuert wird,
**dadurch gekennzeichnet,**
- **dass** abhängig vom Betriebszustand eine Zugriffsberechtigung auf ein Betriebsmittel exklusiv genau einem Prozessablauf zugeordnet wird.

2. Verfahren nach Anspruch 1, **dadurch gekennzeichnet, dass** zumindest zwei Betriebsmittel abhängig von ihren jeweiligen Funktionen oder anderen Sortierkriterien innerhalb der Verpackungsmaschine zu einer Gruppe zugeordnet werden und dass die exklusive Zugriffsberechtigung zu einer Gruppe einem Prozessablauf zugeordnet ist.

3. Verfahren nach einem der vorangehenden Ansprüche, **dadurch gekennzeichnet, dass** nur der exklusiv zugriffsberechtigte Prozessablauf einen Zustand eines Betriebsmittels ansteuern und/oder ändern kann.

4. Verfahren nach einem der vorangehenden Ansprüche, **dadurch gekennzeichnet, dass** bei jedem Wechsel zwischen zwei Betriebszuständen die Zugriffsberechtigung auf ein Betriebsmittel oder eine Gruppe überprüft wird und gegebenenfalls eine Zugriffsberechtigung auf ein Betriebsmittel oder eine Gruppe einem anderen Prozessablauf zugewiesen wird.

5. Verfahren nach einem der vorangehenden Ansprüche, **dadurch gekennzeichnet, dass** sich die Verpackungsmaschine zu jedem Zeitpunkt in nur genau einen Betriebszustand befindet.

6. Verfahren nach einem der vorangehenden Ansprüche, **dadurch gekennzeichnet, dass** zumindest in einem der Prozessabläufe zumindest zwei Unterprozesse definiert sind.

7. Verfahren nach einem der vorangehenden Ansprüche, **dadurch gekennzeichnet, dass** in einem Prozessablauf oder einem Unterprozess jeweils ein Zugriff auf zumindest eines der Betriebsmittel über zumindest eine Zugriffstabelle definiert ist.

8. Verfahren nach einem der vorangehenden Ansprüche, **dadurch gekennzeichnet, dass** in einer Zugriffstabelle für zumindest ein Betriebsmittel zumindest ein Soll-Zustand definiert ist.

9. Verfahren nach einem der vorangehenden Ansprüche, **dadurch gekennzeichnet, dass** eine Zugriffstabelle genau einem Prozessablauf zugeordnet ist.

10. Verfahren nach einem der vorangehenden Ansprüche, **dadurch gekennzeichnet, dass** in einer Zugriffstabelle jeweils in einer Zugriffsbeschreibung Soll-Betriebsmittelzustände von zumindest zwei Betriebsmitteln beschrieben werden.

11. Verfahren nach einem der vorangehenden Ansprüche, **dadurch gekennzeichnet, dass** die Verpackungsmaschine abhängig von den in der Zugriffstabelle definierten Betriebsmittelzuständen gesteuert wird.

12. Verfahren nach einem der vorangehenden Ansprüche, **dadurch gekennzeichnet, dass** ein Betriebszustand zumindest einer aus der Menge:
- Hochfahren / Hochlaufen,
- Bereit zur Sterilisation und/oder Reinigung,
- Sterilisation,
- Produktion,
- Bereit zur Reinigung,
- Reinigung (CIP),
- Herunterfahren,
ist

13. Verfahren nach einem der vorangehenden Ansprüche, **dadurch gekennzeichnet, dass** ein Prozessablauf zumindest einer aus der Menge:
- Sterilisation, insbesondere H₂O₂-Sterilisation,
- Sterilisation während der Produktion, insbesondere H₂O₂-Sterilisation während der Produktion,
- Dampfsterilisation,
- Produktion,
- Kettenreinigung,
-- Dampfsperre / Dampfknoten,
- Umlaufreinigung
- Basisprozessablauf
ist.

14. Verfahren nach einem der vorangehenden Ansprüche, **dadurch gekennzeichnet, dass** ein Betriebsmittel zumindest eines aus der Menge:
- Stellventil,
- Heizung,
- Druckluftgenerator,
- Dampfeinheit,
- Stellmotor,
- Pumpe,
- Ventilator,
- Sterilisator,
- Regelkreis eines Sensors,
- logische Verknüpfung,
- Im- und/oder Exportsignal
ist.

15. Verpackungsmaschine, insbesondere eine Füllmaschine, mit
- einer Steuereinrichtung,
- einem Programmspeicher,
- einer Mehrzahl von Betriebsmitteln, insbesondere Aktoren und/oder Sensoren, wobei
- die Steuereinrichtung einen Zugriff von einem in dem Programmspeicher hinterlegten Prozessablauf auf zumindest eines der Betriebsmittel steuert,
**dadurch gekennzeichnet,**
- **dass** abhängig von einem Betriebszustand die Steuereinrichtung exklusiv nur einem der Prozessabläufe eine Zugriffsberechtigung auf ein Betriebsmittel erteilt.

## Claims

1. Method for controlling a packaging machine, in particular a filling machine, in which
- at least two operating states of the packaging machine are defined which are independent from one another,
- at least one of a plurality of defined process sequences is allocated to each of the operating states and
- at least one operating resource of the packaging machine is actuated by a process sequence, in order to carry out at least one action,
**characterised in that**
- an authorisation for access to an operating resource is exclusively allocated to one single process sequence depending on the operating state.

2. Method according to Claim 1, **characterised in that** at least two operating resources depending on their respective functions or other sort criteria within the packaging machine are allocated to a group, and **in that** the exclusive authorisation for access to a group is allocated to one process sequence.

3. Method according to any one of the preceding claims, **characterised in that** only the exclusively access authorised process sequence can actuate and/or change a state of an operating resource.

4. Method according to any one of the preceding claims, **characterised in that** with each change between two operating states the authorisation for access to an operating resource or a group is checked and as appropriate an authorisation for access to an operating resource or a group is assigned to another process sequence.

5. Method according to any one of the preceding claims, **characterised in that** the packaging machine is specifically only in one operating state at each point in time.

6. Method according to any one of the preceding claims, **characterised in that** at least two sub-processes are defined in at least one of the process sequences.

7. Method according to any one of the preceding claims, **characterised in that** in a process sequence or a sub-process access to at least one of the operating resources is defined via at least one access table, respectively.

8. Method according to any one of the preceding claims, **characterised in that** at least one target state is defined for at least one operating resource in an access table.

9. Method according to any one of the preceding claims, **characterised in that** an access table is specifically allocated to a process sequence.

10. Method according to any one of the preceding claims, **characterised in that** target operating resource states of at least two operating resources are described in an access description in an access table, respectively.

11. Method according to any one of the preceding claims, **characterised in that** the packaging machine is controlled depending on the operating resource states defined in the access table.

12. Method according to any one of the preceding claims, **characterised in that** an operating state is at least one of the operating states from the following group:
- power up/start up,
- ready for sterilisation and/or cleaning,
- sterilisation,
- production,
- ready for cleaning,
- cleaning (CIP),
- shut down.

13. Method according to any one of the preceding claims, **characterised in that** a process sequence is at least one of the process sequences from the following group:
- sterilisation, in particular H₂O₂ sterilisation,
- sterilisation during production, in particular H₂O₂ sterilisation during production,
- steam sterilisation,
- production,
- chain cleaning,
- steam barrier/steam node,
- circulation cleaning,
- base process operation.

14. Method according to any one of the preceding claims, **characterised in that** an operating resource is at least one of the operating resources from the following group:
- control valve,
- heater,
- compressed air generator,
- steam unit,
- servomotor,
- pump,
- ventilator,
- steriliser,
- a sensor control system,
- logical interconnection,
- import signal and/or export signal.

15. Packaging machine, in particular a filling machine, having
- a control device,
- a program memory,
- a plurality of operating resources, in particular actuators and/or sensors, wherein
- the control device controls an access by a process sequence stored in the program memory to at least one of the operating resource,
**characterised in that**
- depending on an operating state the control device exclusively grants to only one of the process sequences an access authorisation to an operating resource.

## Revendications

1. Procédé de commande d'une machine d'emballage, en particulier d'une machine de remplissage, procédé dans lequel
- au moins deux états de fonctionnement de la machine d'emballage, indépendants l'un de l'autre, sont définis,
- au moins une séquence de processus définie parmi une pluralité de séquences est associée à chacun des états de fonctionnement, et
- sous l'effet d'une séquence de processus, au moins un moyen de fonctionnement de la machine d'emballage est piloté pour l'exécution d'au moins une action,
**caractérisé**
**en ce que**, en fonction de l'état de fonctionnement, un droit d'accès à un moyen de fonctionnement est attribué, de façon exclusive, précisément à une séquence de processus.

2. Procédé selon la revendication 1, **caractérisé en ce qu'**au moins deux moyens de fonctionnement, d'une manière qui dépend de leurs fonctions respectives ou qui dépend d'autres critères de tri à l'intérieur de la machine d'emballage, sont associés à un groupe, et **en ce que** le droit d'accès exclusif à un groupe est attribué à une séquence de processus.

3. Procédé selon l'une des revendications précédentes, **caractérisé en ce que** seulement la séquence de processus bénéficiant de l'accès attribué de façon exclusive peut piloter et/ou modifier un état d'un moyen de fonctionnement.

4. Procédé selon l'une quelconque des revendications précédentes, **caractérisé en ce que**, dans le cas de chaque changement entre deux états de fonctionnement, le droit d'accès à un moyen de fonctionnement ou à un groupe est vérifié, et en le cas échéant un droit d'accès à un moyen de fonctionnement ou à un groupe, est attribué à une autre séquence de processus.

5. Procédé selon l'une quelconque des revendications précédentes, **caractérisé en ce que** la machine d'emballage se trouve, à tout moment, précisément dans un seul état de fonctionnement.

6. Procédé selon l'une quelconque des revendications précédentes, **caractérisé en ce qu'**au moins deux sous-processus sont définis au moins dans l'une des séquences de processus.

7. Procédé selon l'une quelconque des revendications précédentes, **caractérisé en ce que**, au cours d'une séquence de processus, ou bien au cours d'un sous-processus, un accès à au moins l'un des moyens de fonctionnement est défini à chaque fois en passant par au moins un tableau d'accès.

8. Procédé selon l'une quelconque des revendications précédentes, **caractérisé en ce qu'**au moins un état théorique est défini dans un tableau d'accès pour au moins un moyen de fonctionnement.

9. Procédé selon l'une quelconque des revendications précédentes, **caractérisé en ce qu'**un tableau d'accès est associé précisément à une séquence de processus.

10. Procédé selon l'une quelconque des revendications précédentes, **caractérisé en ce que**, dans un tableau d'accès, respectivement dans une description d'accès, des états théoriques de moyens de fonctionnement sont décrits, à savoir ceux d'au moins deux moyens de fonctionnement.

11. Procédé selon l'une quelconque des revendications précédentes, **caractérisé en ce que** la machine d'emballage est commandée en fonction des états de moyens de fonctionnement définis dans le tableau d'accès.

12. Procédé selon l'une quelconque des revendications précédentes, **caractérisé en ce qu'**un état de fonctionnement est au moins l'un de ceux parmi la quantité indiquée ci-après :
- démarrage / accélération,
- prêt pour la stérilisation et/ou pour le nettoyage,
- stérilisation,
- production,
- prêt pour le nettoyage,
- nettoyage en place (NEP),
- mise à l'arrêt.

13. Procédé selon l'une quelconque des revendications précédentes, **caractérisé en ce qu'**une séquence de processus est au moins l'une de celles parmi la quantité indiquée ci-après :
- stérilisation, en particulier stérilisation H₂O₂,
- stérilisation au cours de la production, en particulier stérilisation H₂O₂ au cours de la production,
- stérilisation à la vapeur,
- production,
- nettoyage de la chaîne,
- écran pare-vapeur / anneau de vapeur,
- nettoyage par circulation,
- séquence de processus de base.

14. Procédé selon l'une quelconque des revendications précédentes, **caractérisé en ce qu'**un moyen de fonctionnement est au moins l'un de ceux parmi la quantité indiquée ci-après :
- soupape de régulation,
- chauffage,
- générateur d'air comprimé,
- unité de vapeur,
- servomoteur,
- pompe,
- ventilateur,
- stérilisateur,
- circuit de régulation d'un capteur,
- connexion logique,
- signal d'importation et/ou d'exportation de données.

15. Machine d'emballage, en particulier machine de remplissage, comprenant
- un dispositif de commande,
- une mémoire de programme,
- une pluralité de moyens de fonctionnement, en particulier d'actionneurs et/ou de capteurs, où
- le dispositif de commande, à partir d'une séquence de processus enregistrée dans la mémoire de programme, pilote un accès à au moins l'un des moyens de fonctionnement,
**caractérisée**
**en ce que**, en fonction d'un état de fonctionnement, le dispositif de commande délivre, de façon exclusive, un droit d'accès à un moyen de fonctionnement, seulement à l'une des séquences de processus.
